# EUROPEAN PATENT APPLICATION

(11) **EP 1 798 903 A1**
(43) Date of publication of application: **20.06.2007**
(21) Application number: 05292750.6
(22) Date of filing: 15.12.2005
(51) Int. Cl.: H04L 12/413

(54) **Processor**

(71) Applicant: Alcatel Lucent, 75008 Paris (FR)
(72) Inventor: De Maere Wouter Drik Helena, B-1861 Wolvertem (BE); De Meulenaere Paul Gilbert Regina, B.2650 Edegem (BE)
(74) Representative: Narmon, Gisèle Marie Thérèse

(57) **Abstract**

In processors (1) comprising components (11, 21) that comprise application parts (12, 22) and Internet Protocol processing parts (13,23) for processing Internet Protocol information, the components (11, 21) are provided with Ethernet parts (14,24) for processing Ethernet information and the processor (1) is provided with a bridge component (2) for bridging the Ethernet information for a communication between the components (11, 21), to reduce port collision chances between the components (11, 21). The components (11, 21) are software components and the processing of the Ethernet information comprises additions of Ethernet based headers to Internet Protocol packets of the Internet Protocol information originating from the Internet Protocol processing parts (13, 23) and/or comprises removals of Ethernet based headers from the Ethernet information destined for the Internet Protocol processing part (13, 23). Ethernet based headers comprises Medium Access control addresses and/or Virtual Local Area Network tags and the Ethernet parts (14, 24) comprise software emulated Medium Access Control entities and the bridge component 2 comprises a Medium Access control bridge.

## Description

The invention relates to a processor comprising a first component and a second component, the first component comprising a first application part and a first Internet Protocol processing part for processing first Internet Protocol information and the second component comprising a second application part and a second Internet Protocol processing part for processing second Internet Protocol information.

Examples of such a processor are central processing units.

A prior art processor is of common general knowledge. The first component comprises a first application part for performing a first application and comprises a first Internet Protocol processing part for processing first Internet Protocol information for a communication with the second component and/or for a communication with hardware and/or software situated outside the processor. The second component comprises a second application part for performing a second application and comprises a second internet Protocol processing part for processing second Internet Protocol information for a communication with the first component and/or for a communication with hardware and/or software situated outside the processor.

Problems may arise in case both components perform applications that require a use of a same port number (for example the same user Datagram Protocol port or the same Transmission control Protocol port). In that case, both components are no longer independent from each other. The fact that, in the prior art processor, the first and second Internet Protocol processing parts are parts of one common Internet Protocol processing part further increases possible dependencies between the components.

The known processor is disadvantageous, inter alia, owing to the fact that it comprises components that may collide. Its components have a relatively large collision chance (or risk).

It is an object of the invention, inter alia, to provide a processor as defined above that comprises components that have a relatively low collision chance (or risk).

The processor according to the invention is characterized in that the first component comprises a first Ethernet part for processing first Ethernet information and the second component comprises a second Ethernet part for processing second Ethernet information and the processor comprises a bridge component for bridging the Ethernet information for a communication between the first and second components.

By providing the components with the Ethernet parts, firstly the first and second Internet Protocol parts can be separate and independent Internet Protocol parts, and secondly the first and second components can communicate with each other via the bridge component and by using Ethernet information. As a result, the components will have a relatively low collision chance and the Ethernet information used for said communication will prevent any problems that may arise in case both components perform applications that require a use of a same port number.

The processor according to the invention is further advantageous, inter alia, in that a first prior art processor, that comprises one or more components that collide with one or more components of a second prior art processor and that therefore could not be integrated with the second processor without introducing disadvantages, can now be integrated easily.

The bridge component may further take care of a communication from/to an external entity. It may bridge frames from whatever input bridge port to whatever output bridge port. Then, a destination can be inside or outside the processor, while a source such as a sending component does not need to worry about the question whether the destination is inside or outside the processor. The bridge component can take care of this.

An embodiment of the processor according to the invention is characterized in that the components are software components.

For example two software components may comprise two non-operating system components as well as one non-operating system component and one operating system component as well as two operating system components.

An embodiment of the processor according to the invention is characterized in that the processing of the respective first and second Ethernet information comprises an addition of an Ethernet based header to an Internet Protocol packet of the respective first and second Internet Protocol information originating from the respective first and second Internet Protocol processing part and/or comprises a removal of an Ethernet based header from the respective first and second Ethernet information destined for the respective first and second internet Protocol processing part.

The Ethernet based headers are headers that do not need to fully correspond with Ethernet headers but that will comprise at least some of the information that is usually present in Ethernet headers.

An embodiment of the processor according to the invention is characterized in that an Ethernet based header comprises a Medium Access Control address.

The Medium Access control address may comprise a Medium Access Control source address and/or a Medium Access control destination address.

An embodiment of the processor according to the invention is characterized in that the Ethernet parts comprise software emulated Medium Access Control entities and the bridge component comprises a Medium Access control bridge.

The software emulated Medium Access Control entities and the Medium Access control bridge function well in combination with the Ethernet based headers comprising Medium Access control addresses.

An embodiment of the processor according to the invention is characterized in that the first and second components have distinct Medium Access Control addresses.

The distinct Medium Access control addresses may comprise distinct Medium Access Control source addresses and/or a distinct Medium Access Control destination addresses.

An embodiment of the processor according to the invention is characterized in that an Ethernet based header comprises a virtual Local Area Network tag.

The virtual Local Area Network tag may comprise a virtual Local Area Network identifier.

The invention also relates to a method for a communication between first and second components of a processor, the first component comprising a first application part and a first Internet Protocol processing part for processing first Internet Protocol information and the second component comprising a second application part and a second Internet Protocol processing part for processing second Internet Protocol information.

The method according to the invention is characterized in that the method comprises a first method step of processing first Ethernet information via a first Ethernet part of the first component and a second method step of processing second Ethernet information via a second Ethernet part of the second component and a third method step of bridging the Ethernet information via a bridge component of the processor for said communication.

The invention also relates to a computer program product for performing at least one of the method steps of the method as defined above.

Such a processor program product may comprise the first component and/or the second component and/or the bridge component.

The invention also relates to a medium comprising the computer program product as defined above.

Embodiments of the method according to the invention and of the computer program product according to the invention and of the medium according to the invention correspond with the embodiments of the processor according to the invention.

The invention is based upon an insight, inter alia the components in the processor should be independent from each other. The invention is based upon a basic idea, inter alia, that Ethernet parts are to be added to the Internet Protocol parts and that a bridge component is to be added between the first and second components.

The invention solves the problem, inter alia, to provide a processor as defined above that comprises components that have a relatively low collision chance (or risk). The processor according to the invention is further advantageous, inter alia, in that a first prior art processor, that comprises one or more components that collide with one or more components of a second prior art processor and that therefore could not be integrated with the second processor without introducing disadvantages, can now be integrated easily.

These and other aspects of the invention will be apparent from and elucidated with reference to the embodiments(s) described hereinafter.
Fig. 1 shows diagrammatically a processor according to the invention,
Fig. 2 shows a flow chart of a method according to the invention, and
Fig. 3 shows a flow chart of a method according to the invention.

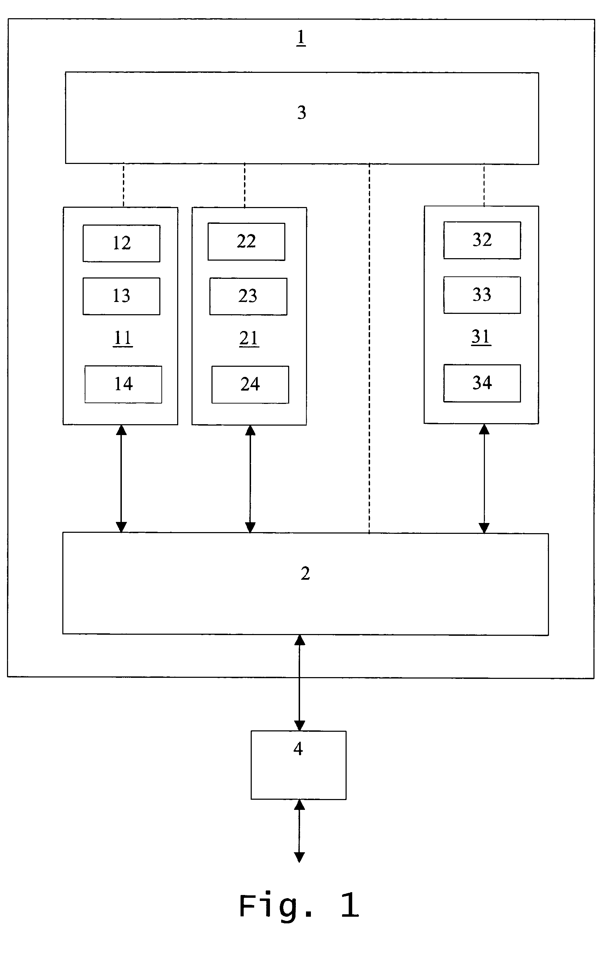

The processor 1 according to the invention shown in Fig. 1 comprises the respective first and second and third components 11 and 21 and 31 that comprise the respective application parts 12 and 22 and 32 and the respective first and second and third Internet Protocol processing parts 13 and 23 and 33 for processing the respective first and second and third Internet Protocol information. The respective first and second and third components 11 and 21 and 31 further comprise the respective first and second and third Ethernet parts 14 and 24 and 34 for processing the respective first and second and third Ethernet information. The processor 1 further comprises a bridge component 2 for bridging the Ethernet information for a communication between at least two of the three components 11 and 21 and 31. The bridge component 2 is further coupled to an entity 4 situated outside the processor 1. The processor 1 further comprises a control component 3 for controlling the components 11 and 21 and 31 and 3. Further application parts per component and further components are not to be excluded. At least two components 11 and 21 and 31 will each comprise at least one application part, at least one Internet Protocol processing part and at least one Ethernet part.

In a prior art situation, the Ethernet parts 14 and 24 and 34 and the bridge component 2 are not present. The first application part 12 performs a first application and the first Internet Protocol processing part processes first Internet Protocol information for a communication with for example the second component 21 and/or for a communication with hardware and/or software situated outside the processor 1. The second application part 22 performs a second application and the second Internet Protocol processing part processes second Internet Protocol information for a communication with for example the first component 11 and/or for a communication with hardware and/or software situated outside the processor 1. Then problems may arise in case both components 11 and 21 perform applications that require a use of a same port number, in which case both components 11 and 21 are no longer independent from each other. The fact that, in the prior art situation, the first and second Internet Protocol processing parts 13 and 23 are parts of one common Internet Protocol processing part further increases possible dependencies between the components 11 and 21.

To reduce a collision chance between the components 11 and 21, the first and second components 11 and 21 are provided with the first and second Ethernet parts 14 and 24 for processing first and second Ethernet information, and the processor 1 is provided with a bridge component 2 for bridging the Ethernet information for a communication between the first and second components 11 and 21. As a result, the first and second Internet Protocol parts 13 and 23 can be separate and independent Internet Protocol parts, and the first and second components 11 and 21 can communicate with each other via the bridge component 2 and by using Ethernet information. This reduces the port collision chance much. The Ethernet information used for said communication will prevent any problems that may arise in case both components 11 and 21 perform applications that require a use of a same port number (for example the same user Datagram Protocol port or the same Transmission Control Protocol port).

Preferably, the components 11 and 21 are software components such as for example two non-operating system components or one non-operating system component and one operating system component or two operating system components.

The processing of the respective first and second Ethernet information comprises for example an addition of an Ethernet based header to an Internet Protocol packet of the respective first and second Internet Protocol information originating from the respective first and second Internet Protocol processing part 13 and 23 and/or comprises for example a removal of an Ethernet based header from the respective first and second Ethernet information destined for the respective first and second Internet Protocol processing part 13 and 23.

The Ethernet based headers are headers that do not need to fully correspond with Ethernet headers but that will comprise at least some of the information that is usually present in Ethernet headers, such as for example a Medium Access Control address that may comprise a Medium Access Control source address and/or a Medium Access Control destination address. The Ethernet parts 14 and 24 comprise for example software emulated Medium Access Control entities and the bridge component 2 comprises for example a Medium Access Control bridge. Other addresses and entities and bridges are not to be excluded. However, the software emulated Medium Access Control entities and the Medium Access control bridge function well in combination with the Ethernet based headers comprising Medium Access Control addresses.

Preferably, the first and second components 11 and 21 have distinct Medium Access control addresses such as distinct Medium Access Control source addresses and/or a distinct Medium Access control destination addresses. The Ethernet based header may comprise a virtual Local Area Network tag such as a Virtual Local Area Network identifier, without excluding other tags and identifiers.

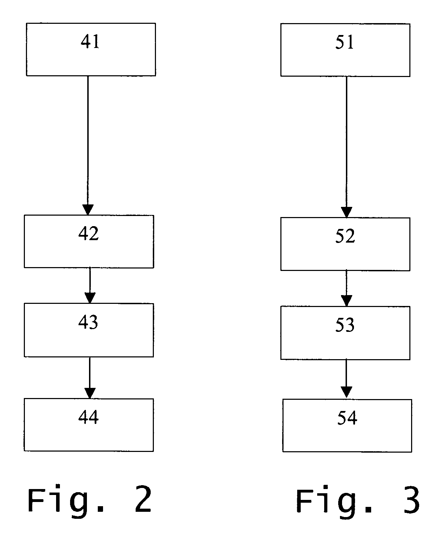

In the flow chart of a method according to the invention as shown in Fig. 2, the following blocks have the following meaning:
Block 41: First information is generated at the first application part 12 and is supplied to the first Internet Protocol processing part 13, goto 42.
Block 42: First Internet Protocol information is generated at the first Internet Protocol processing part 13 and is added to the first information originating from the first application part 12 and a first combination of information is supplied to the first Ethernet part 14, goto 43.
Block 43: First Ethernet information is generated at the first Ethernet part 14 and is added to the first combination of information originating and a further first combination of information is supplied to the bridge component 2, goto 44.
Block 44: The bridge component 2 detects the further first combination of information (including one or more Medium Access control addresses) that might be destined for a component inside the processor 1 or that might be destined for an entity 4 outside the processor 1 and bridges the further first combination of information (for example based on and/or in dependence of one or more Medium Access Control addresses).

In the flow chart of a method according to the invention as shown in Fig. 3, the following blocks have the following meaning:
Block 51: The bridge component 2 detects a further second combination of information (including one or more Medium Access control addresses) that might originate from a component inside the processor 1 or that might originate from an entity 4 outside the processor 1 and for example finds out that the further second combination of information is destined for the second component 21 and bridges it to the second Ethernet part 24 (for example based on and/or in dependence of one or more Medium Access Control addresses), goto 52.
Block 52: second Ethernet information is, at the second Ethernet part 24, removed from the further second combination of information and a remaining second combination of information is supplied to the second Internet Protocol processing part 23, goto 53.
Block 53: second Internet Protocol information is, at the second Internet Protocol processing part 23, removed from the second combination of information and remaining second information is supplied to the second application part 22, goto 54.
Block 54: The second application part 22 uses the second information.

In case the further first combination of information and the further second combination of information are identical to each other, then the Fig. 2 and 3 describe an internal communication from the first component 11 to the second component 21.

So, in a prior art situation, for example two or more software components or SW-components on a single processor or CPU want to communicate with each other. Each SW-component already contains a protocol stack on its own that allows communication with the world outside the CPU. communication between these SW-components can obviously be done using the available protocol stacks, but this causes problems such as:
- Both SW-components can not independently use the same UDP or TCP port numbers (for example, when both components each like to run a Simple Network Management Protocol-agent. Many applications such as SNMP-agents often have fixed port numbers agreed by standards).
- Both SW-components need to run on top of one common (IP-) protocol stack. So, the assumption that each SW-component has its own protocol stack does not fly anymore.

According to the invention, Ethernet communication (bridging) between sw-components within one CPU is established. This resolves the collision in UDP or TCP port numbers, because different MAC-addresses can be used, and traffic segregation happens based on these MAC-addresses before the port-numbers are being used.

In addition, these SW-components do not need to know whether their communication-peers are inside or outside the CPU.

To solve these problems, the separate IP-protocol stacks as available from the starting assumption are kept: one for the first SW-component 11, another for the second SW-component 21. For each SW-component's IP-protocol stack, an Ethernet-layer is added that is able to add or remove an Ethernet header (Destination MAC-address, Source MAC-address and VLAN tag(s)) to or from an IP-packet. This Ethernet-layer only needs to prepare Ethernet frames in memory. It does NOT send Ethernet frames on a physical layer and is preferably a "SW-emulated MAC-entity". To enable communication, there is another common component in the CPU, called the MAC-bridge. Via this MAC-bridge, each SW-component using its own IP-protocol stack and SW-emulated MAC-entity is able to communicate with other SW-components on the same CPU and simultaneously communicate with the external world (i.e. outside the cPu). The involved SW-components therefore all preferably have an individual MAC-address. When existing SW-components rely on Ethernet (i.e. MAC-based) communication, it makes these sw-components re-usable in the context of a single CPU, and dependencies between the two SW-components if they want to address the same TCP or UDP port are not created. These are great advantages.

Any block shown may be divided into sub-blocks, and any two or more blocks may be integrated into a new and larger block. Any block shown may comprise hardware and/or software. The computer program product according to the invention may be stored on and/or comprise a fixed medium not shown or a removable medium not shown of the processor 1.

The expression "for" in for example "for processing" and "for bridging" etc. does not exclude that other functions are performed as well, simultaneously or not. The expressions "X coupled to Y" and "a coupling between x and Y" and "coupling/couples X and Y" etc. do not exclude that an element z is in between X and Y. The expressions "P comprises Q" and "P comprising Q" etc. do not exclude that an element R is comprised/included as well. The terms "a" and "an" do not exclude a possible presence of one or more pluralities.

The steps and/or functions of processing and bridging do not exclude further steps and/or functions, like for example, inter alia, the steps and/or functions described for the Figures, etc.

## Claims

1. Processor (1) comprising a first component (11) and a second component (21), the first component (11) comprising a first application part (12) and a first Internet Protocol processing part (13) for processing first Internet Protocol information and the second component (21) comprising a second application part (22) and a second Internet Protocol processing part (23) for processing second Internet Protocol information, **characterized in that** the first component (11) comprises a first Ethernet part (14) for processing first Ethernet information and the second component (21) comprises a second Ethernet part (24) for processing second Ethernet information and the processor (1) comprises a bridge component (2) for bridging the Ethernet information for a communication between the first and second components (11, 21).

2. Processor (1) as defined in claim 1, **characterized in that** the components (11, 21) are software components.

3. Processor (1) as defined in claim 1 or 2, **characterized in that** the processing of the respective first and second Ethernet information comprises an addition of an Ethernet based header to an Internet Protocol packet of the respective first and second Internet Protocol information originating from the respective first and second Internet Protocol processing part (13, 23) and/or comprises a removal of an Ethernet based header from the respective first and second Ethernet information destined for the respective first and second Internet Protocol processing part (13, 23).

4. Processor (1) as defined in claim 3, **characterized in that** an Ethernet based header comprises a Medium Access control address.

5. Processor (1) as defined in claim 4, **characterized in that** the Ethernet parts (14, 24) comprise software emulated Medium Access control entities and the bridge component (2) comprises a Medium Access control bridge.

6. Processor (1) as defined in claim 5, **characterized in that** the first and second components (11, 21) have distinct Medium Access Control addresses.

7. Processor (1) as defined in claim 3, **characterized in that** an Ethernet based header comprises a virtual Local Area Network tag.

8. Method for a communication between first and second components (11, 21) of a processor (1), the first component (11) comprising a first application part (12) and a first Internet Protocol processing part (13) for processing first Internet Protocol information and the second component (21) comprising a second application part (22) and a second Internet Protocol processing part (23) for processing second Internet Protocol information, **characterized in that** the method comprises a first method step of processing first Ethernet information via a first Ethernet part (14) of the first component (11) and a second method step of processing second Ethernet information via a second Ethernet part (24) of the second component (21) and a third method step of bridging the Ethernet information via a bridge component (2) of the processor (1) for said communication.

9. Computer program product for performing at least one of the method steps of the method as defined in claim 8.

10. Medium comprising the computer program product as defined in claim 9.
